# EUROPEAN PATENT APPLICATION

(11) **EP 4 752 729 A1**
(43) Date of publication of application: **03.06.2026**
(21) Application number: 25816120.7
(22) Date of filing: 07.02.2025
(51) Int. Cl.: G06F 11/07, G06F 11/30, G06F 11/14, G06F 8/65, G06F 8/71

(54) **BATTERY MANAGEMENT DEVICE AND METHOD FOR OPERATING BATTERY MANAGEMENT DEVICE**

(30) Priority: 28.05.2024 KR 20240068946
(71) Applicant: LG Energy Solution, Ltd., Seoul 07335 (KR)
(72) Inventor: OH, Youngkyu, Daejeon 34122 (KR)
(74) Representative: Plasseraud IP
(86) International application number: PCT/KR2025/001798
(87) International publication number: WO 2025/249702

(57) **Abstract**

A method for operating a battery management device, according to an embodiment of the present invention, may comprise the steps of: reading, when booting the battery management device, update information of battery management system (BMS) software-related setting values among BMS software-related data stored in a non-volatile memory of the battery management device; comparing the update information of the BMS software-related setting values with update-related values defined in the BMS software; and determining that the BMS is inoperable if the update information of the BMS software-related setting values does not match the update-related values defined in the software.

## Description

### [Technical Field]

This application claims priority to and the benefit of Korean Patent Application No.10-2024-0068946 filed in the Korean Intellectual Property Office on May 28, 2024 the entire contents of which are incorporated herein by reference.

The present invention relates to a battery management apparatus and operation method thereof, and more particularly, to a battery management apparatus and an operation method related to BMS software related setting information.

### [Background Art]

Secondary batteries, which are rechargeable and reusable, are manufactured as battery modules or battery packs by connecting multiple battery cells in series according to the output capacity required by a device, and are used as power sources for various devices. Such batteries are used in various fields, including small high-tech electronic devices such as smart-phones, as well as electric bicycles, electric vehicles, and energy storage systems (ESS).

A battery pack is a structure composed of multiple battery cells, and if overvoltage, overcurrent, or overheating occurs in some battery cells, problems may occur in the safety and operating efficiency of the battery pack, so a means for detecting these problems is essential. Therefore, a battery pack is equipped with a BMS (Battery Management System) that measures the voltage value of each battery cell and monitors and controls the voltage status of the battery cells based on the measured value.

Meanwhile, a battery management system (BMS) may also be installed in an energy storage system that links renewable energy, batteries, and the power grid, so as to 3monitor the state of the battery, such as voltage, current, and temperature. A processor of the battery management system uses software to perform related operations, and BMS configuration setting information required for the BMS software to operate needs to be defined.

However, if the BMS configuration setting information is not defined in the battery management system or the configuration setting information that does not correspond to a current BMS software version is stored in the battery management system, the battery management system may malfunction.

### [Detailed Description of the Invention]

### [Technical Problem]

To obviate one or more problems of the related art, embodiments of the present disclosure provide a battery management apparatus.

To obviate one or more problems of the related art, embodiments of the present disclosure also provide an operation method of the battery management apparatus related to BMS software related setting information.

### [Technical Solution]

In order to achieve the objective of the present disclosure, a battery management apparatus may include at least one processor, and a memory configured to store at least one instruction executed by the at least one processor, and the at least one instruction may include an instruction to read update information of battery management system (BMS) software related setting values stored in a nonvolatile memory of the battery management apparatus when booting, an instruction to compare the update information of the BMS software related setting values with an update related value defined in BMS software, and an instruction to determine that the battery management apparatus is inoperable if the update information of the BMS software related setting values does not match the update related value defined in the BMS software.

The update related value defined in the BMS software may be set as a constant value in BMS software codes.

The at least one instruction may further include an instruction to perform normal operation of the battery management apparatus when the update information of the BMS software related setting values matches the update related value defined in the BMS software.

The instruction to perform the normal operation of the battery management apparatus may include an instruction to read one or more of the BMS software related setting values stored in the nonvolatile memory, and an instruction to interpret the one or more of the BMS software related setting values according to a MAP of the BMS software.

Meanwhile, the at least one instruction may further include an instruction to sequentially write the BMS software related setting values to the nonvolatile memory in a BMS setting value input mode, and an instruction to record the update related value defined in the BMS software as update information of the BMS software related setting values of the nonvolatile memory, if normal recording is completed once or more for all addresses of the nonvolatile memory.

The nonvolatile memory may include a first nonvolatile memory that stores the BMS software and the update related value, and the first nonvolatile memory is located inside the at least one processor.

The nonvolatile memory may further include a second nonvolatile memory that stores the update information of the BMS software related setting values and one or more of the BMS software related setting values, and the second nonvolatile memory is located outside the at least one processor.

According to another embodiment of the present disclosure, an operation method of a battery management apparatus may include, when the battery management apparatus is booting, reading update information of battery management system (BMS) software related setting values among BMS software related data stored in a nonvolatile memory of the battery management apparatus, comparing the update information of the BMS software related setting values with an update related value defined in BMS software, and determining that the battery management apparatus is inoperable if the update information of the BMS software related setting values does not match the update related value defined in the BMS software.

The update related value defined in the BMS software may be set as a constant value in BMS software codes.

The operation method of the battery management apparatus may further include performing normal operations of the battery management apparatus when the update information of the BMS software related setting values matches the update related value defined in the BMS software.

The performing of the normal operations of the battery management apparatus may include reading one or more of the BMS software related setting values stored in the nonvolatile memory, and interpreting the one or more of the BMS software related setting values according to a MAP of the BMS software.

The operation method of the battery management apparatus may further include, upon the battery management apparatus determined as inoperable state, entering into a BMS setting value input mode, sequentially writing the BMS software related setting values to the nonvolatile memory, and recording the update related value defined in the BMS software as update information of the BMS software related setting values of the nonvolatile memory, if normal recording is completed once or more for all addresses of the nonvolatile memory.

Meanwhile, the nonvolatile memory may include a first nonvolatile memory that stores the BMS software and the update related value, and the first nonvolatile memory is located inside a processor.

In addition, the nonvolatile memory may further include a second nonvolatile memory that stores the update information of the BMS software related setting values and one or more of the BMS software related setting values, and the second nonvolatile memory is located outside the processor.

### [Advantageous Effects]

According to the embodiments of the present invention as described above, even when BMS setting information is not defined within the battery management apparatus or the BMS setting information that does not correspond to the current BMS software version is stored within the battery management apparatus, it is possible to prevent malfunction of the battery management apparatus by determining whether the battery management apparatus can be operated normally, using update information of the BMS software related setting values.

### [Brief Description of theDrawings]

FIG. 1 shows an example of a battery system structure to which the present invention may be applied.
FIG. 2 shows a block diagram of a battery management apparatus for explaining a BMS software update.
FIG. 3 shows an example of a data recognition error that may occur during a typical BMS software update process.
FIG. 4 shows an example of a BMS operation concept in a software update process according to embodiments of the present invention.
FIG. 5 shows an operational sequence when the battery management apparatus is generally booted according to embodiments of the present invention.
FIG. 6 shows an operational sequence when a battery management apparatus operates in a BMS setting value input mode according to embodiments of the present invention.
FIG. 7 is a block diagram of a battery management apparatus according to embodiments of the present invention.

100 : battery
200 : battery management apparatus
210 : controller
211 : first memory
222 : second memory
250 : communication unit
270: user interface

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a basic unit that serves to store power and a battery pack refers to an assembly in which aplurality of battery cells is electrically connected.

A battery rack refers to a system of a single structure which is assembled by electrically connecting modules set by a battery manufacturer and may be monitored and controlled by a battery management apparatus/system (BMS). A battery rack may include a plurality of battery packs (modules) and a battery protection unit or any other protection device.

A battery bank refers to a group of large-scale battery rack systems configured by connecting a plurality of battery racks in parallel. A bank BMS for a battery bank may monitor and control severalrack BMSs, each of which manages a battery rack.

Hereinafter, embodiments of the present invention will be described in detail with reference to the accompanying drawings.

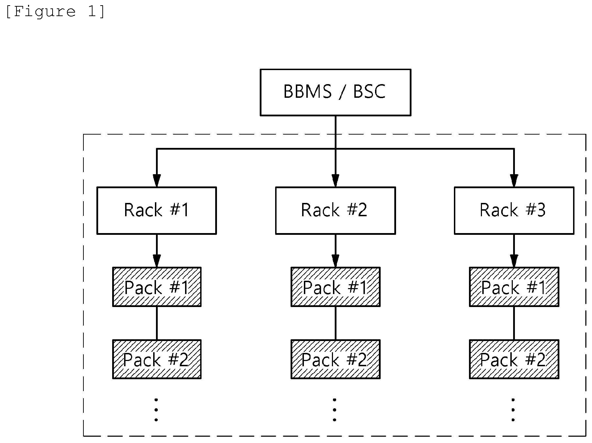

FIG. 1 shows an example of a battery system structure to which the present invention may be applied.

In the battery system of FIG. 1, a plurality of battery packs may be included in a battery rack, and a plurality of battery racks may be included in a battery bank. The battery system illustrated in FIG. 1 may be a part of an energy storage system.

Here, a battery management system (BMS) may be installed in each of the battery pack, the battery rack, and the battery bank. In FIG. 1, the battery pack may be configured to include a plurality of battery cells connected in series. The battery cells may be connected to a load through positive and negative terminals and may perform a charge/discharge operation. The most commonly used battery cell is a lithium-ion (Li-Ion) battery cell. A battery management system (BMS) may be installed in each of these battery packs.

A pack BMS may monitor the current, voltage, and temperature of each battery pack it manages, calculate the state of charge (SOC) based on the monitoring results, and control charging and discharging. Here, the SOC maya current charged state of the battery expressed as a percentage [%].

In order to perform such operations, the BMS may include various components such as fuses, current sensing elements, thermistors, switches, and balancers, and in most cases, it includes a Micro Controller Unit (MCU) or a Battery Monitoring Integrated Chip (BMIC) to connect and control them. Here, the BMIC may be an IC-type component located inside the BMS that measures information such as voltage, temperature, and current of the battery cell/module.

Meanwhile, each rack BMS (RBMS) may manages each battery rack, and a Bank BMS(BBMS) may control a battery bank including these battery racks as a whole. Each RBMS may monitor current, voltage, and temperature of each battery rack, and calculate SOC and control charging and discharging based on the monitoring results. Multiple rack BMSs may be connected to a battery system controller (or battery section controller; BSC), and the battery system controller may manage and control the entire battery system. In the embodiment of FIG. 1, the bank BMS (BBMS) is shown to perform the same function as the BSC, and may be referred to as BBMS or BSC depending on the system.

The BMS may also monitor battery cells, read cell voltages, and transmit them to other systems connected to the battery. For this, the BMS may include a communication module for communicating with other systems within a device including the battery system. The communication module of the BMS may communicate with other systems within the device using the Controller Area Network (CAN). Here, components, modules, or systems within the BMS are connected to each other via a CAN bus.

The battery management apparatus (BMS) according to embodiments of the present invention may be one of a battery system controller(BSC)/BBMS which manages the entire battery bank, a rack BMS which is connected to the BSC/BBMS and manages each battery rack, and a pack BMS which is connected to the rack BMS and manages each battery pack.

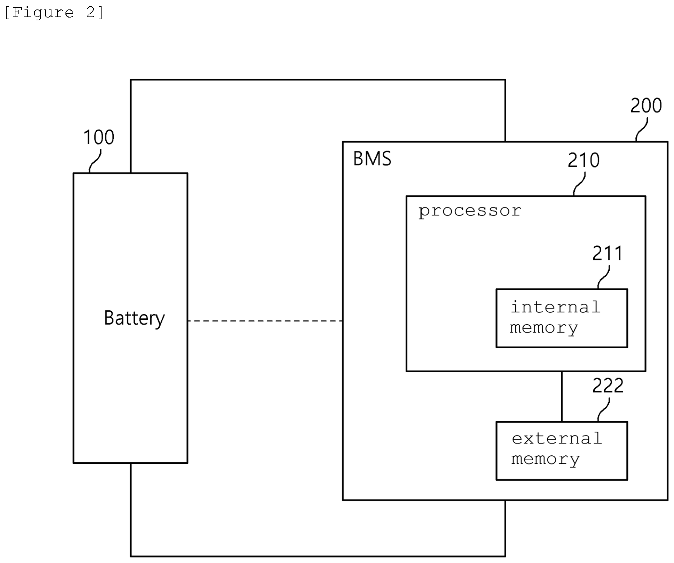

FIG. 2 shows a block diagram of a battery management apparatus for explaining a BMS software update.

As previously discussed in Fig. 1, the battery management apparatus 200 monitors and manages a battery 100. Here, the battery may mean various types of battery assemblies such as a battery pack (module), a battery rack, and a battery bank. The battery management apparatus 200 may include a processor 210 and a memory 211, 222, and may additionally include various components and circuits, such as a battery monitoring circuit (e.g., Battery Monitoring Integrated Chip (BMIC).

Meanwhile, the battery management apparatus 200 may include a nonvolatile memory (internal memory) 211 inside the processor 210. In an embodiment, the internal memory 211 of the processor 210 may be a flash memory. Software (e.g., an application) for the operation of the battery management apparatus 200 may be stored in the internal memory 211 of the processor 210. A bootloader may also be stored in the internal memory 211 of the processor 210 for booting the battery management apparatus 200.

The battery management apparatus 200 may include a separate external memory 222, for example, a nonvolatile memory, in addition to the internal memory 211 in the processor 210. The external memory 222 may store BMS setting values that determine operations of BMS software, for example, a number of battery packs, diagnostic thresholds, fault occurrence history, etc. The external memory 222 may also store warranty data.

Meanwhile, the battery management apparatus requires software updates for various reasons, such as functional improvement and addition of new functions. In the present invention, the software updates may include concepts of software upgrades and downgrades. The processor 210 may receive a software update command and new software from an external device. In an embodiment, the external device may receive new software from a computing device connected via a network.

In response to the software update command, the processor 210 may overwrite an area in the internal memory 211 where the existing software is stored with new software 222. According to an embodiment, the processor may erase the existing software from the internal memory 211 and write new software. In some embodiments, the processor may perform a reset and jump to a bootloader to write new software to the internal memory 211. Accordingly, the existing software may be deleted from the internal memory 210 and the new software may be written, so that the software can be updated.

When booting using the new software, the processor 210 may load configuration values that determine operations of the software stored in the external memory 222 and operate using the configuration values. The processor 210 may interpret BMS configuration setting value-related data (e.g., binary data) stored in the external memory 222 using a software MAP that defines the configuration setting (NV: Non-Volatile)) values. Meanwhile, the BMS software MAP may be stored together with the BMS software in the software.

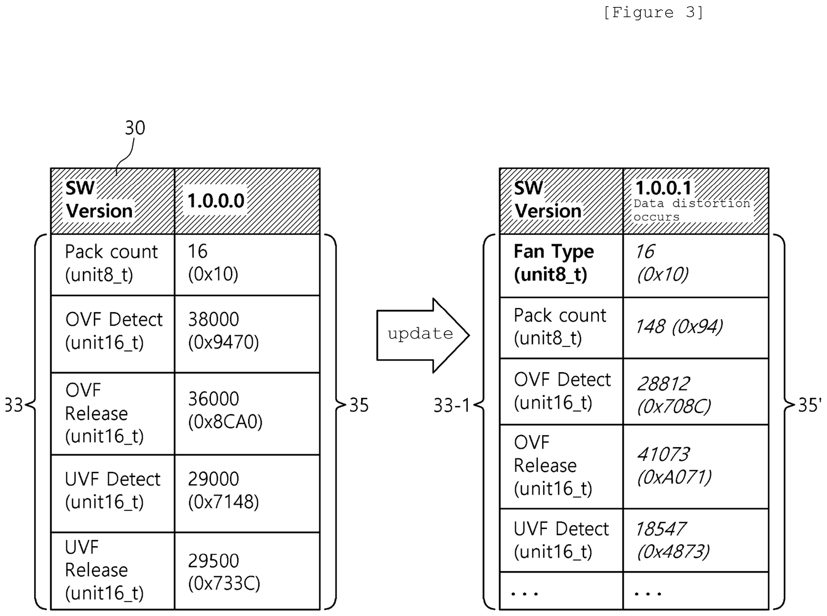

FIG. 3 shows an example of a data recognition error that may occur during a typical BMS software update process.

In a battery management apparatus having the configuration of FIG. 2, when a typical software update is performed, the battery management apparatus starts up according to the new software recorded in an internal memory 211 and performs battery management operations.

Here, the processor 210 may interpret setting values that determine operations of the BMS software using a software MAP and perform related operations. Here, the BMS software related setting values 35 that determine the operations of the BMS software may include, for example, a number of battery packs, a diagnostic threshold, a fault occurrence history, etc.

Referring to the example of FIG. 3, when a software version 30 before an update is 1.0.0.0, it can be seen that a MAP 33 according to the version 1.0.0.0 is defined in the order of "pack count (unit8_t), "OVF (Over Voltage Fault) Detect (unit16_t)", "OVF Release (unit16_t)", "UVF (Under Voltage Fault) Detect (unit16_t)", "UVF Release (unit16_t)."

In addition, the BMS software related setting values 35 stored in the external non-volatile memory are "pack count = 16", "OVF (Over Voltage Fault) Detect = 38000", "OVF Release = 36000", "UVF (Under Voltage Fault) Detect = 29000", "UVF Release = 29500". The processor may interpret the BMS software related setting values 35 according to the defined MAP 33. Here, the BMS software related setting values 35 may be stored in a bundle by category (for example, voltage diagnosis related, current diagnosis related, etc.) for each data in the external non-volatile memory 222 area.

Meanwhile, if an update is performed as shown in FIG. 3 and a new software version 30 is changed to 1.0.0.1, the new software may interpret the values set in the external memory according to the software MAP 33-1 defined according to the version 1.0.0.1. In other words, the processor 210 reads the same binary data as before the software update, but interprets the corresponding data according to the MAP of the new software, so the processor obtains an interpretation result that is completely different from before the update.

Referring to the data interpretation after the update of FIG. 3, the MAP 33-1 according to the new software includes related data which is defined in the order of "Fan Type", "Pack count", "OVF (Over Voltage Fault) Detect", "OVF Release", "UVF (Under Voltage Fault) Detect". Thus, if the binary data related to the BMS software setting values previously stored in the nonvolatile memory are interpreted according to the order defined in the MAP 33-1, data distortion (35') occurs.

In order to solve this problem, the present invention may store information on a number of times that information recorded in the nonvolatile memory is updated in the memory in the case of software updates, etc., and use the stored information on the number of update to prevent data distortion and to block malfunction of the BMS.

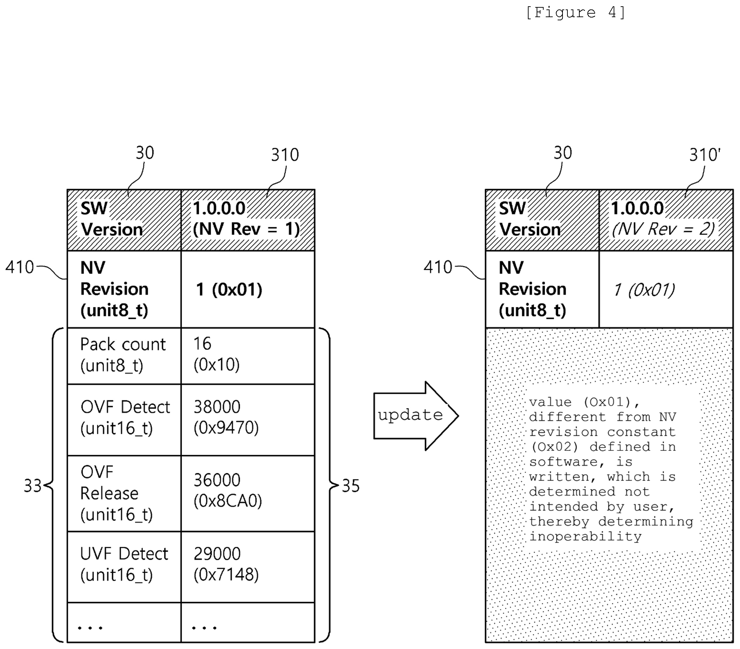

FIG. 4 shows an example of a BMS operation concept in a software update process according to embodiments of the present invention.

In the example in FIG. 4, if the software version 30 before the update is 1.0.0.0, the MAP 33 according to the version 1.0.0.0 is defined in the order of "Pack count (unit8_t), "OVF (Over Voltage Fault) Detect (unit16_t)", "OVF Release (unit16_t)", "UVF (Under Voltage Fault) Detect (unit16_t)", and "UVF Release (unit16_t)".

The processor of the battery management apparatus according to embodiments of the present invention may interpret BMS software related setting values 35 according to the predefined MAP 33. In addition, according to embodiments of the present invention, update information (NV revision) 410 of the BMS software related setting values may be stored in the memory. Here, the update information of the BMS software related setting values may mean a number of times the BMS software related setting values have been updated and recorded. Here, according to an embodiment, the update information (NV revision) 410 of the BMS software related setting values may be stored in the external memory 222.

Meanwhile, according to embodiments of the present invention, setting value update information 310 may be included in the BMS software in the form of a constant value. The constant value defined in such software may be understood as a literal value (fixed in source code) that is definitely defined in the software code. For example, a software developer may change and set the constant value (increasing the value in proportion to a version) whenever the software is newly developed.

For example, if the BMS was initially produced in the factory and the setting values were recorded once, the setting value update information 410 may be recorded as "1 (Ox01)" as shown in FIG. 4. Afterwards, if a software update is performed as shown in FIG. 4 and the software version 30 is changed to 1.0.0.1, the update information 310' defined as a constant in the changed software is also changed to "Ox02".

However, even if the new software is stored in the internal memory according to the software update command, there is still no change in the existing setting values that were previously recorded/stored for the BMS software operation. Accordingly, the update information (NV revision) 410 of the BMS software related setting values stored in the nonvolatile memory is still maintained as "1 (Ox01)".

According to embodiments of the present invention, in such a case that if a value (Ox01) different from the update constant (Ox02) defined in the software is stored in the nonvolatile memory as update information of the BMS software related setting values, the processor of the battery management apparatus may determine the value as a value not intended by a user and determine that the BMS is inoperable.

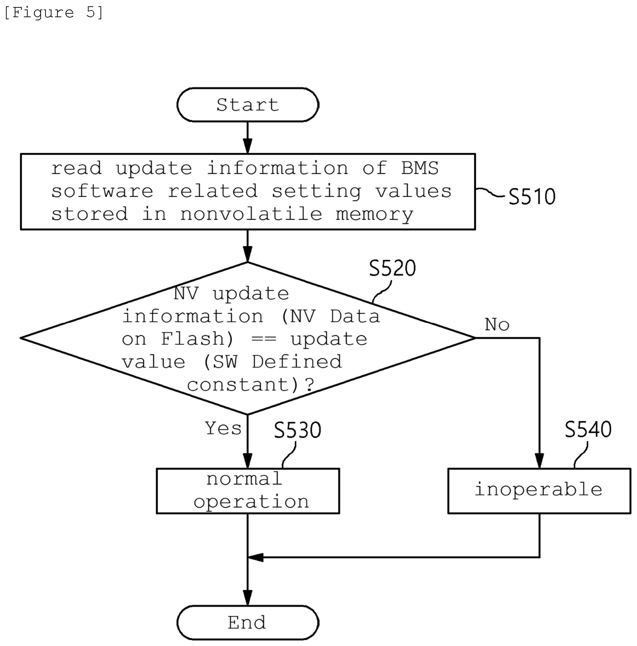

FIG. 5 shows an operational sequence when the battery management apparatus is generally booted according to embodiments of the present invention.

When a battery management apparatus is generally booted, for example, when a battery management apparatus, installed in an Energy Storage System (ESS) field, is booted and started to operate, the processor 210 may read (S510) update information of the BMS software related setting values stored in the nonvolatile memory. Here, the nonvolatile memory may be a memory located outside the processor 210. The nonvolatile memory may also be a flash memory.

According to an embodiment, the process of the processor 210 reading the update information of the BMS software related setting values stored in the nonvolatile memory may include a detailed process of reading all data stored in the nonvolatile memory and extracting the update information of the BMS software related setting values from the data. Meanwhile, according to another embodiment, the processor 210 may first read only the data in at least one address where the update information (written in a designated area in the memory) is stored among the entire data stored in the nonvolatile memory. Here, the update information of the BMS software related setting values stored in the nonvolatile memory may be stored in the memory of the first address among all data stored in the nonvolatile memory.

The processor may compare the update information of the BMS software related setting values (NV Data on Flash) recorded in the nonvolatile memory with the update constant (SW Defined constant) defined in the software to determine whether the two values are the same (S520). Here, the update-related value defined in the BMS software may be set as a constant value on the BMS software codes.

If the two values are the same, the processor may perform normal operations according to the BMS software (S530). When the battery management apparatus is operating normally, one or more BMS software related setting values stored in the nonvolatile memory may be read, and the one or more BMS software related setting values may be interpreted according to a MAP of the BMS software.

Meanwhile, if the update information of the BMS software related setting values recorded in the nonvolatile memory is different from the update constant defined in the software, the processor may determine that a value not intended by the user is stored in the nonvolatile memory and processes it as BMS inoperability (S540).

More specifically, in normal operation (S530), the battery management apparatus may perform the overall function operations of the BMS, such as current data update, diagnosis, cell balancing, and charging/discharging of the battery pack (module).

On the other hand, in the case where the BMS is processed as inoperable (S540), the battery management apparatus may enter a BMS setting value input mode (e.g., factory mode). The battery management apparatus may perform normal BMS operation after performing a process of recording the BMS setting values in the nonvolatile memory through the BMS setting value input mode.

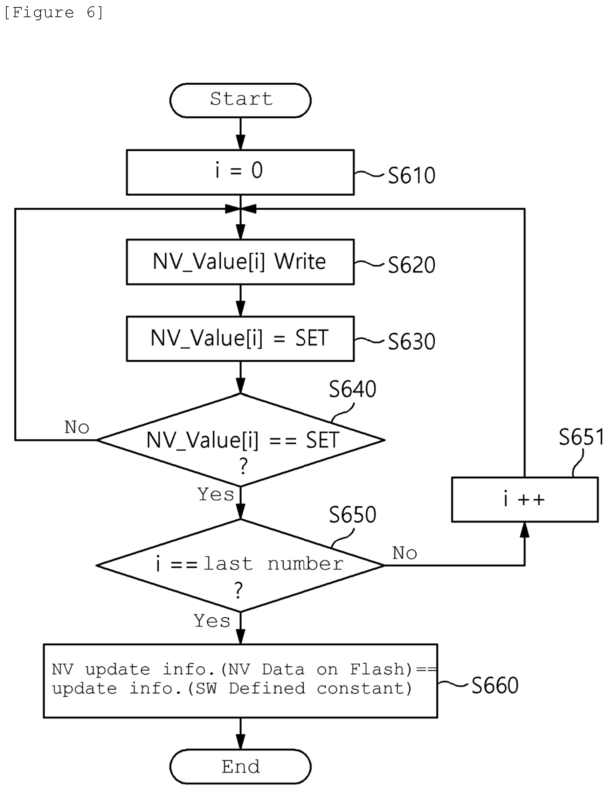

FIG. 6 shows an operational sequence when a battery management apparatus operates in a BMS setting value input mode according to embodiments of the present invention.

In a BMS setting value input mode (e.g., factory mode), setting values such as "pack count", "OVF (Over Voltage Fault) Detect", "OVF Release", "UVF (Under Voltage Fault) Detect", and "UVF Release" may be sequentially written to a nonvolatile memory. The BMS software setting values written to the nonvolatile memory may be defined in such a way that, for example, NV_Value [0] represents a setting value for the pack count, NV_Value[1] represents an OVF detection value, and NV _Value[2] represents an OVF release value.

Referring to FIG. 6, as a pre-work, a variable i related to the BMS setting value is initialized to "0" (S610). Then, the NV values of the NV_Value[i] category are written to the nonvolatile memory (S620), and the corresponding NV values are validated (SET) (S630). It may be checked whether the NV value of the NV _Value[i] category is valid (S640), and the writing and validation are reworked if it is invalid (NO of S640).

If the corresponding NV _Value[i] category value is valid, the value of variable i is increased (S651), and the writing (S620) and validation (SET) work (S630) for each category is performed. The writing (S620) and validation (SET) work (S630) for each category is performed until the last set value to be written is reached (S650).

When one or more normal writes are completed for all addresses of non-volatile memory, the processor may write a value equal to an update constant defined in the software (SW Defined constant) to the update information (NV Data on Flash) of BMS software related setting values of non-volatile memory (S660).

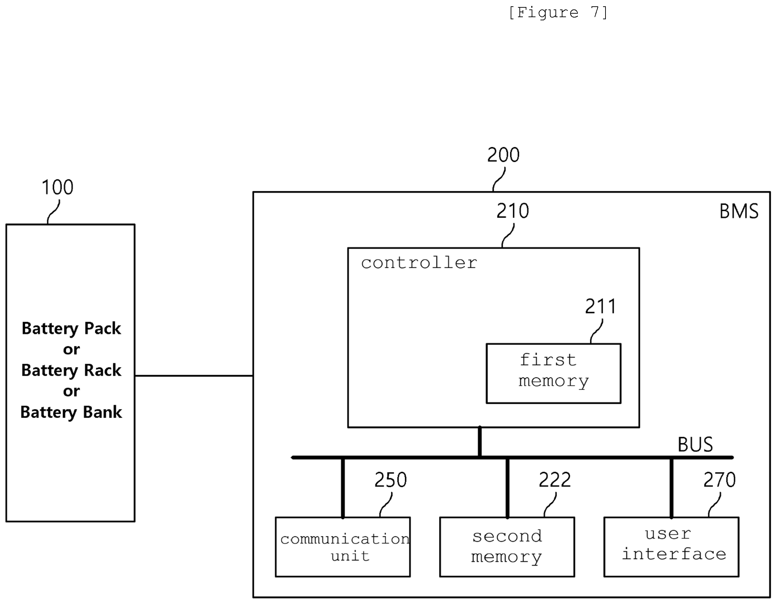

FIG. 7 is a block diagram of a battery management apparatus according to embodiments of the present invention.

The battery management apparatus 200 according to embodiments of the present invention may include a controller 210; and a memory storing at least one instruction executed through the processor. Here, the memory may include at least one of a first memory 211 and a second memory 222 of FIG. 7.

Here, the at least one instruction may include an instruction to read update information of battery management system (BMS) software related setting values stored in a nonvolatile memory of the battery management apparatus when booting; an instruction to compare the update information of the BMS software related setting values with an update related value defined in BMS software; and an instruction to determine that the battery management apparatus is inoperable if the update information of the BMS software related setting values does not match the update related value defined in the software.

The update related value defined in the BMS software is set as a constant value in BMS software codes.

The at least one instruction may further include an instruction to perform normal operation of the battery management apparatus when the update information of the BMS software related setting values matches the update related value defined in the BMS software.

The instruction to perform normal operation of the battery management apparatus may include an instruction to read one or more BMS software related setting values stored in the nonvolatile memory; and an instruction to interpret the one or more BMS software related setting values according to a MAP of the BMS software.

Meanwhile, the at least one instruction may further include an instruction to sequentially write the BMS software related setting values to the nonvolatile memory in a BMS setting value input mode; and an instruction to record the update related value defined in the BMS software as update information of the BMS software related setting values of the nonvolatile memory, if normal recording is completed once or more for all addresses of the nonvolatile memory.

Meanwhile, the nonvolatile memory may include a first nonvolatile memory that stores the BMS software and the update related value. Here, the first nonvolatile memory may be located inside the controller, such as the first memory 211 illustrated in FIG. 7. In an embodiment, the internal memory 211 of the controller 210 may be a programmable ROM or flash memory. Software (e.g., application) for operations of the battery management apparatus 200 may be stored in the internal memory 211 of the controller 210. A bootloader may also be stored in the internal memory 211 of the controller 210 for booting the battery management system 200.

In another embodiment, the internal memory 211 of the controller 210 may be a programmable read-only memory (ROM). The programmable ROM may be, for example, an electrically erasable programmable ROM (EEPROM).

In addition, the nonvolatile memory may further include a second nonvolatile memory that stores the update information of the BMS software related setting values and one or more BMS software related setting values. Here, the second nonvolatile memory may be located outside the controller 210, such as the second memory 222 in FIG. 7.

In an embodiment, the external memory 222 may be a programmable ROM or flash memory. The external memory 222 may store setting values that determine the operation of the software, for example, a number of battery packs, diagnosis thresholds, fault occurrence history, etc. The external memory 222 may also store warranty data.

According to embodiments, the controller 210 may be referred to as a processor, a control unit, an micro controller unit (MCU), etc. in this specification, and may also mean a dedicated processor on which methods according to embodiments of the present invention are performed.

Meanwhile, the battery management apparatus 200 may further include a communication unit 250, a user interface 270 including an input/output interface, etc. The communication unit 250 of the battery management apparatus may communicate with internal components as well as other systems within the device using Controller Area Network (CAN). Here, components, modules, or systems within the BMS may be connected to each other via a CAN bus.

According to the embodiments of the present invention as described above, even when BMS setting information is not defined within the battery management apparatus or the BMS setting information that does not correspond to the current BMS software version is stored within the battery management apparatus, it is possible to prevent malfunction of the battery management apparatus by determining whether the battery management apparatus can be operated normally, using update information of the BMS software related setting values.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the embodiment of the present invention, but those skilled in the art may appreciate that the present invention may be variously corrected and changed within the range without departing from the spirit and the area of the present invention described in the appending claims.

## Claims

1. A battery management apparatus comprising:
at least one processor; and
a memory configured to store at least one instruction executed by the at least one processor,
wherein the at least one instruction includes:
an instruction to, when booting, read update information of battery management system (BMS) software related setting values stored in a nonvolatile memory of the battery management apparatus;
an instruction to compare the update information of the BMS software related setting values with an update related value defined in BMS software; and
an instruction to determine that the battery management apparatus is inoperable if the update information of the BMS software related setting values does not match the update related value defined in the BMS software.

2. The apparatus of claim 1, wherein the update related value defined in the BMS software is set as a constant value in BMS software codes.

3. The apparatus of claim 1, wherein the at least one instruction further includes:
an instruction to perform normal operations of the battery management apparatus when the update information of the BMS software related setting values matches the update related value defined in the BMS software.

4. The apparatus of claim 3, wherein the instruction to perform the normal operations of the battery management apparatus includes:
an instruction to read one or more of the BMS software related setting values stored in the nonvolatile memory; and
an instruction to interpret the one or more of the BMS software related setting values according to a MAP of the BMS software.

5. The apparatus of claim 1, wherein the at least one instruction further includes:
an instruction to sequentially write the BMS software related setting values to the nonvolatile memory in a BMS setting value input mode; and
an instruction to record the update related value defined in the BMS software as update information of the BMS software related setting values of the nonvolatile memory, if normal recording is completed once or more for all addresses of the nonvolatile memory.

6. The apparatus of claim 1, wherein the nonvolatile memory includes a first nonvolatile memory that stores the BMS software and the update related value, and
wherein the first nonvolatile memory is located inside the at least one processor.

7. The apparatus of claim 6, wherein the nonvolatile memory further includes a second nonvolatile memory that stores the update information of the BMS software related setting values and one or more of the BMS software related setting values, and
wherein the second nonvolatile memory is located outside the at least one processor.

8. An operation method of a battery management apparatus, the method comprising:
when the battery management apparatus is booting, reading update information of battery management system (BMS) software related setting values among BMS software related data stored in a nonvolatile memory of the battery management apparatus;
comparing the update information of the BMS software related setting values with an update related value defined in BMS software; and
determining that the battery management apparatus is inoperable if the update information of the BMS software related setting values does not match the update related value defined in the BMS software.

9. The method of claim 8, wherein the update related value defined in the BMS software is set as a constant value on BMS software codes.

10. The method of claim 8, further comprising:
performing normal operations of the battery management apparatus when the update information of the BMS software related setting values matches the update related value defined in the BMS software.

11. The method of claim 10, the performing of the normal operations of the battery management apparatus includes:
reading one or more of the BMS software related setting values stored in the nonvolatile memory; and
interpreting the one or more of the BMS software related setting values according to a MAP of the BMS software.

12. The method of claim 8, further comprising:
upon the battery management apparatus determined as inoperable state,
entering into a BMS setting value input mode;
sequentially writing the BMS software related setting values to the nonvolatile memory; and
recording the update related value defined in the BMS software as update information of the BMS software related setting values of the nonvolatile memory, if normal recording is completed once or more for all addresses of the nonvolatile memory.

13. The method of claim 8, wherein the nonvolatile memory includes a first nonvolatile memory that stores the BMS software and the update related value, and
wherein the first nonvolatile memory is located inside a processor of the battery management apparatus.

14. The method of claim 13, wherein the nonvolatile memory further includes a second nonvolatile memory that stores the update information of the BMS software related setting values and one or more of the BMS software related setting values, and
wherein the second nonvolatile memory is located outside the processor.
